Europäisches Patentamt

European Patent Office

Office européen des brevets

(19)

(11) Veröffentlichungsnummer : **0 151 793**
**B1**

(12)

# EUROPÄISCHE PATENTSCHRIFT

(45) Veröffentlichungstag der Patentschrift :
**15.03.89**

(21) Anmeldenummer : **84116224.1**

(22) Anmeldetag : **22.12.84**

(51) Int. Cl.⁴ : **F 02 M 53/04, F 02 M 61/18**

(54) **Kraftstoffeinspritzdüse für Brennkraftmaschinen.**

(30) Priorität : **10.02.84 DE 3404709**

(43) Veröffentlichungstag der Anmeldung :
**21.08.85 Patentblatt 85/34**

(45) Bekanntmachung des Hinweises auf die Patenterteilung : **15.03.89 Patentblatt 89/11**

(84) Benannte Vertragsstaaten :
**DE FR GB IT**

(56) Entgegenhaltungen :
**DE--A-- 1 526 709**
**DE--A-- 3 113 466**
**DE--C--  873 011**
**FR--A-- 1 089 892**
**GB--A--  699 484**
**GB--A-- 2 066 895**
**US--A-- 1 465 822**

(73) Patentinhaber : **ROBERT BOSCH GMBH**
**Postfach 50**
**D-7000 Stuttgart 1 (DE)**

(72) Erfinder : **Auwärter, Gerhard**
**Franziskaweg 6**
**D-7000 Stuttgart 70 (DE)**
Erfinder : **Imhof, Ernst**
**Danziger Strasse 3/1**
**D-7015 Münchingen (DE)**
Erfinder : **Komaroff, Iwan**
**Schwabelweiser Weg 13a**
**D-8400 Regensburg (DE)**
Erfinder : **Kirner, Kuno, Dr.-Ing.**
**Drosselweg 12**
**D-7016 Gerlingen 25 (DE)**

EP 0 151 793 B1

## Beschreibung

Die Erfindung geht aus von einer Kraftstoff-Einspritzdüse für Brennkraftmaschinen nach der Gattung des Hauptanspruchs. Bei Direkteinspritzmotoren ist der Boden des Düsenkörpers außerordentlichen Temperaturbelastungen ausgesetzt. Die Verdichtungsendtemperatur beim Dieselmotor liegt zwischen 700 und 900°C, bei einem Verbrennungshöchstdruck zwischen 65 und 90 bar. Die moderne Entwicklung, den Motor aus hitzebeständigerem Material, beispielsweise aus Keramik, zu machen und den Druck der Verdichtung und analog der Einspritzung zu erhöhen, um bessere, besonders thermische Wirkungsgrade zu erhalten, vergrößert entsprechend die Belastung der Einspritzdüse. Zwar bewirkt der beim Einspritzen die Einspritzdüse durchströmende Kraftstoff eine gewisse Kühlung, doch reicht diese häufig nicht aus, um eine Verkokung an den Spritzöffnungen oder gar am Ventilsitz zu unterbinden. Die Nachteile sind eine schlechte Kraftstoffzerstäubung und damit eine schlechte Aufbereitung des Kraftstoff-Luftgemisches mit der Folge vermehrter Rußemission und von Leistungsverlusten bzw. hohem Kraftstoffverbrauch. Diese Belastung des Düsenkörperbodens wird extrem, wenn in der Nähe desselben im Brennraum eine Heizvorrichtung vorgesehen ist, durch die die Zündung das Kraftstoff-Luftgemisches besonders bei kalten Brennkraftmaschinen verbessert wird. Aber auch bei warmen Brennkraftmaschinen wird durch den Dauerbetrieb eines derartigen Glühvorsatzes eine Wirkungsgradverbesserung erzielt, sowie eine Verringerung des Verbrennungsgeräusches im Teillastbereich. Besonders bei Vollast wirkt sich dieses Dauerglühen als eine außerordentlich hohe thermische Belastung des Düsenkörperbodens aus.

Aus der GB-A-20 66 895 sind Einspritzdüsen der gattungsmäßigen Art bekannt, bei denen sich eine topfförmige Wärmeschutzkappe mit geringem radialen Spaltung über einen wesentlichen Teil der Länge des Düsenkörpers erstreckt und entweder umittelbar an der Düsenspannmutter befestigt oder durch diese gegen eine radiale Schulter am Düsenkörper gespannt ist. Die Wärmeschutzkappe selbst trägt keine wärmedämmende Schicht auf ihren dem Brennraum zugekehrten Oberflächenbereichen und die Druckschrift enthält auch keinen Hinweis, daß der radiale Spalt zwischen der Wärmeschutzkappe und dem Mantel des Düsenkörpers eine Wärmeschutzfunktion ausüben soll. Die Ausbildung der Wärmeschutzkappe mit dem nach oben hochgezogenen zylindrischen Mantelteil verfolgt vielmehr den Zweck, daß die Wärmeschutzkappe beim Ausbauen der Einspritzdüse aus der Einbaubohrung im Zylinderkopf der Maschine zwangsläufig mit entfernt wird. Ferner sind aus der DE-A-15 26 709 Kraftstoff-Einspritzdüsen für große Dieselmotoren bekannt, bei denen der Düsenkörper in Abweichung von der gattungsmäßigen Art über den größeren Teil seiner Länge flüssigkeitsgekühlt ist. Derartige Einspritzdüsen benötigen einen hohen Aufwand für die Kühlung und werden vornehmlich bei Motoren eingesetzt, bei denen Schweröle als Kraftstoff verwendet werden, die einen hohen Anteil an korrosionsfördernden Stoffen enthalten. Bei starker Kühlwirkung der Flüssigkeitskühlung kann es zu einer Kondensation der in den Verbrennungsprodukten enthaltenen Säureanteile und im Gefolge davon zu einer Korrosion der den Verbrennungsprodukten ausgesetzten Flächen der Einspritzdüse kommen. Um dem entgegenzuwirken, ist der den Kühlflüssigkeitsraum umgebende Kühlmantel auf der dem Brennraum zugekehrten Außenseite mit einer Schicht aus schlecht wärmeleitenden, jedoch hoch korrosionsbeständigen Material überzogen, beispielsweise Keramikmaterial, das jedoch nicht näher spezifiziert ist.

Vorteile der Erfindung

Die erfindungsgemäße Ausbildung einer Kraftstoff-Einspritzdüse mit den kennzeichnenden Merkmalen des Hauptanspruchs stellt auch bei Einspritzdüsen ohne Flüssigkeitskühlung eine ausreichende Kühlung des Düsenkörpers in allen Betriebsbereichen sicher, wobei eine Unterkühlung des Kraftstoffs und demzufolge eine Ausfall von Schwefelverbindungen bei entsprechender Abstimmung der im Hauptanspruch enthaltenen Maßnahmen, nämlich Wärmeschutzkappe, isolierender Luftspalt und wärmedämmende Schicht aus $ZrO_2$ (Zirkonoxid), das durch $Y_2O_3$ (Ytriumoxid) stabilisiert ist, vermieden werden kann. Diese drei genannten Maßnahmen dienen einem einheitlichen Zweck, nämlich dem Wärmeschutz des Düsenbodens, und tragen darüber hinaus insgesamt auch der Forderung Rechnung, daß die Teile möglichst wenig Platz stromab der Spritzöffnung der Einspritzdüse benötigen.

Nach einer vorteilhaften Ausgestaltung der Erfindung ist die Wärmeschutzkappe am Düsenkörper zentriert gehalten an einer der Dicke der Kappenwand entsprechenden Abdrehung am zylindrischen Abschnitt des Düsenkörpers und an einem eine zentrale Spritzöffnung umgebenden Bund an der brennraumseitigen Stirnwand des Düsenkörpers. Die Wärmeschutzkappe ist in diesem Fall auf den Düsenkörper aufsteckbar, wonach der Außendurchmesser von Wärmeschutzkappe und Düsenkörper weitgehend übereinstimmen. Hierdurch ist es möglich, daß die die Einspritzdüse aufnehmende Bohrung im Zylinderkopf der Maschine so klein gehalten werden kann, daß lediglich ein enger radialer Spalt zwischen Bohrungsinnenwand und Düsenkörper bzw. Außenwand der Wärmeschutzkappe besteht. Je enger dieser Spalt ist, desto weniger strömen Brenngase hinein, die ein Festkleben bewirken können und umso günstiger ist der die Einspritzdüse kühlende Wärmeübergang zum Motor.

Wegen des gedrängten Aufbaus ist die erfindungsgemäße Anordnung besonders vorteilhaft anwendbar bei Einspritzeinrichtungen mit einer der Einspritzdüse nachgeschalteten Heizvorrichtung für die aus der Spritzöffnung des Düsenkörpers austretenden Kraftstoff-Strahlen. Weil die Wärmeschutzkappe im Bereich der Spritzöffnung unmittelbar am Boden des Düsenkörpers anliegt und im übrigen im wesentlichen dessen Oberfläche folgt, ist der vor der Düse im Brennraum zur Verfügung stehende Raum minimal beansprucht. Aufgrund dieser Ausbildung der Wärmeschutzkappe kann der schädliche Raum zwischen dem Boden des Düsenkörpers und der oberen Totlage des Motorkolbens minimiert werden.

Ein weiterer Vorteil der erfindungsgemäßen Anordnung besteht darin, daß der Wärmeschutz gemeinsam mit der Einspritzdüse bei deren Herausschrauben aus dem Zylinderkopf der Maschine mit demontiert wird.

Zeichnung

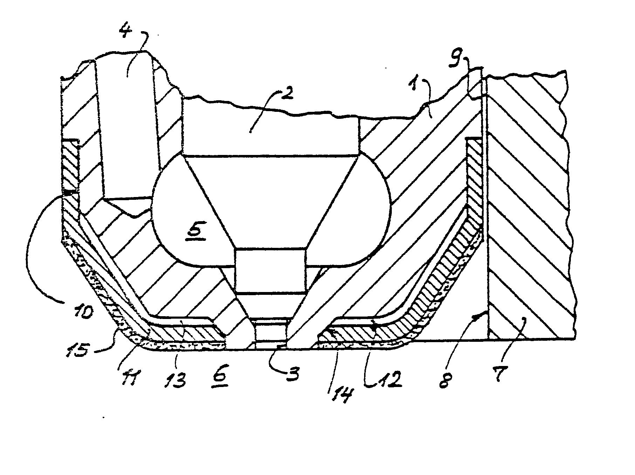

Ein Ausführungsbeispiel des Gegenstandes der Erfindung ist in der Zeichnung dargestellt und im folgenden näher beschrieben.

Beschreibung des Ausführungsbeispiels

In der Zeichnung ist ein Längsschnitt durch den Teil einer Einspritzdüse dargestellt, der zumindest teilweise in den Brennraum einer Brennkraftmaschine ragt. Bei diesem Teil handelt es sich um einen Düsenkörper 1, in welchem eine Ventilnadel 2 durch den unter Druck zugeführten Kraftstoff entgegen einer Rückstellkraft axial verschiebbar gelagert ist. Die Ventilnadel 2 steuert eine Spritzöffnung 3 im Düsenkörper 1. Der Kraftstoff wird von einer nichtdargestellten intermittierend arbeitenden Kraftstoffeinspritzpumpe durch eine Bohrung 4 in einen Druckraum 5 gefördert, um dann — wenn bei ausreichend hohem Druck die Ventilnadel 2 entgegen der Schließkraft verschoben wird — über die Spritzöffnung 3 in den Brennraum 6 des Motors 7 eingespritzt zu werden. Der Düsenkörper 1 durchdringt eine Bohrung 8 im Motorkopf, wobei zwischen dieser Bohrung 8 und dem Düsenkörper 1 nur ein schmaler Ringspalt 9 verbleibt. Die Düse selbst ist entweder — wie nicht dargestellt — in den Motorkopf geschraubt oder über einen Flansch an diesem befestigt und wird bei der Demontage in Öffnungsrichtung der Ventilnadel 2 aus der Bohrung 8 gezogen. Auf dem Düsenkörper 1 ist eine Abdrehung 10 vorgesehen, auf die eine Wärmeschutzkappe 11 gesteckt ist. Die Kappe 11 wird durch nichtdargestellte Mittel nach Aufstecken auf den Düsenkörper 1 fest mit diesem verbunden. Zwischen dem Boden 12 des Düsenkörpers und der Kappe 11 ist ein Luftspalt 13 vorgesehen, der lediglich im Bereich der Spritzöffnung 3 unterbrochen ist. In diesem Bereich stützt sich die Kappe 11 an einem konischen Bund 14 des Düsenkörpers 1 ab.

Die dem Brennraum zugewandte Seite der Kappe 11 ist mit einer wärmedämmenden Isolierschicht 15 überzogen, die aus $ZrO_2$ (Zirkonoxid) besteht, welche durch $Y_2O_3$ (Ytriumoxid) stabilisiert ist.

**Patentansprüche**

1. Kraftstoff-Einspritzdüse für Brennkraftmaschinen, für intermittierende direkte Einspritzung in den Brennraum der Brennkraftmaschine, mit einem Düsenkörper (1) mit mindestens einer Spritzöffnung (3) in einem dem Brennraum zugewandten Boden (12) des Düsenkörpers (1), der durch eine an der Spritzöffnung (3) ausgesparte und auf einen zylindrischen Abschnitt (10) des Düsenkörpers (1) aufgesteckte Wärmeschutzkappe (11) abgedeckt, die einen geschlossenen Luftspalt (13) zum Boden (12) des Düsenkörpers (1) hin begrenzt, dadurch gekennzeichnet, daß die Wärmeschutzkappe (11) auf ihrer dem Brennraum zugekehrten Oberfläche mit einer wärmedämmenden Schicht (15) aus $ZrO_2$ (Zirkonoxid), das durch $Y_2O_3$ (Ytriumoxid) stabilisiert ist, überzogen ist.

2. Einspritzdüse nach Anspruch 1, dadurch gekennzeichnet, daß die Wärmeschutzkappe (11) am Düsenkörper (1) zentriert gehalten ist an einer der Dicke der Kappenwand entsprechenden Abdrehung (10) am zylindrischen Abschnitt des Düsenkörpers (1) und an einem eine zentrale Spritzöffnung (3) umgebenden Bund (14) an der brennraumseitigen Stirnwand des Düsenkörpers (1).

3. Einspritzdüse nach einem der vorhergehenden Ansprüche, gekennzeichnet durch die Verwendung in einer Einspritzeinrichtung mit einer der Einspritzdüse nachgeschalteten Heizvorrichtung für die aus der Spritzöffnung (3) des Düsenkörpers (1) austretenden Kraftstoff-Strahlen.

**Claims**

1. Fuel injection nozzle for internal combustion engines, for intermittent direct injection into the combustion space of the internal combustion engine, with a nozzle body (1) having at least one spray opening (3) in a bottom (12) facing the combustion space, of the nozzle body (1) which is covered by a heat protection cap (11) which is recessed at the spray opening (3) and is pushed onto a cylindrical section (10) of the nozzle body (1) and which delimits a closed air gap (13) towards the bottom (12) of the nozzle body (1), characterized in that the heat protection cap (11) is coated on its surface facing the combustion space with a heat-retarding layer (15) of $ZrO_2$ (zirconium oxide) which is stabilised by $Y_2O_3$ (yttrium oxide).

2. Injection nozzle according to Claim 1, characterized in that the heat protection cap (11) is held centred at the nozzle body (1) on a turning (10), which corresponds to the thickness of the cap wall, on the cylindrical section of the nozzle body (1) and on a collar (14), which surrounds a central spray opening (3), on the front wall of the nozzle body (1) located on the combustion space side.

3. Injection nozzle according to one of the preceding claims, characterized by the use in an injection device with a heating device, which follows the injection nozzle, for the fuel jets emerging from the spray opening (3) of the nozzle body (1).

**Revendications**

1. Buse d'injection de carburant pour moteur à combustion interne, pour injection directe intermittente dans la chambre de combustion du moteur à combustion interne, avec un corps de buse (1) ayant au moins un orifice d'injection (3) dans le fond (12) du corps de buse (1) tourné vers la chambre de combustion, le corps de buse est recouvert d'une chape de protection thermique (11), évidée à l'orifice d'injection (3) et fixée sur un secteur cylindrique (10) du corps de buse (1), cette chape de protection thermique (11) délimite une fente d'air fermée (13) avec le fond (12) du corps de buse (1) et se caractérise en ce qu'elle est recouverte sur sa surface tournée vers la chambre de combustion, par une couche protectrice de la chaleur (15) en $ZrO_2$ (oxyde de zirconium), stabilisé par $Y_2O_3$ (oxyde d'ytrium).

2. Buse d'injection selon la revendication 1, caractérisée en ce que la chape de protection thermique (11) est maintenue centrée sur le corps de buse (1), par un redan (10) correspondant à l'épaisseur de la paroi de la chape, sur la section cylindrique du corps de buse (1) et par un anneau (14) entourant un orifice central d'injection (3) de la paroi frontale du corps de buse (1), côté chambre de combustion.

3. Buses d'injection selon l'une des revendications précédentes, caractérisées par l'utilisation dans un équipement d'injection, d'un dispositif de chauffage branché sur la buse d'injection, pour les jets de combustible s'échappant de l'orifice d'injection (3) du corps de buse (1).